# EUROPEAN PATENT SPECIFICATION

(11) **EP 1 367 897 B1**
(45) Date of publication and mention of the grant of the patent: **27.09.2006**
(21) Application number: 01947741.3
(22) Date of filing: 18.07.2001
(51) Int. Cl.: A01N 59/16, A23B 7/144

(54) **METHOD FOR INHIBITING THE SPROUTING AND FOR AVOIDING THE DISEASE PROLIFERATION IN TUBERS, PREFERABLY POTATOES**
VERFAHREN ZUR KEIMHEMMUNG UND ZUR VERMEIDUNG VON KRANKHEITSPROLEFERATION IN KNOLLEN, VORZUGSWEIZE KARTOFFELN
PROCEDE PERMETTANT D'INHIBER LA GERMINATION ET D'EMPECHER LA PROLIFERATION DE MALADIES DANS DES TUBERCULES, DE PREFERENCE DES POMMES DE TERRE

(30) Priority: 02.03.2001 IT BO20010116
(43) Date of publication of application: 10.12.2003
(73) Proprietor: Consorzio delle Buone Idee, Societa Cooperativa a Responsabilita Limitata, 40050 Villanova di Castenaso (Bo) (IT)
(72) Inventor: PIFFERI, Piergiorgio, I-40139 Bologna (IT)
(74) Representative: Negrini, Elena
(86) International application number: PCT/IB2001/001283
(87) International publication number: WO 2002/069719

(56) References cited:
- WO-A-00/05969
- DATABASE WPI Section Ch, Week 197614 Derwent Publications Ltd., London, GB; Class C03, AN 1976-25916X XP002189210 & SU 476 843 A (BERESNITSKII I E), 29 September 1975 (1975-09-29)

## Description

### TECHNICAL FIELD

The present invention refers to potato treatment firstly fit to prevent their sprouting and to limit the resulting composition variation such as the increase of glycoalkaloids, the green turning, the production of soluble sugars from starch, the increase of chlorogenic acid, which is a browning potential factor in the industrial or domestic use of the tuber, and secondly fit to control the disease growth in tubers, due to microorganism or parasite infections, and the growth of typical preservation physiopathologies.

### BACKGROUND ART

It is known that glycoalkaloids are an anti-nutritional factor and that the increase of phenolic acids, such as chlorogenic acid, can cause in the raw or boiled tuber browning or the oxidized mixture production of phenols which can react with amino acids and amines, with a decrease of the nutritional capacity and the growth of aromas and tastes that can be distasteful.

Furthermore the green turning collateral to sprouting and vegetative resumption of the tuber can modify the general organoleptic characteristic, without the consequent customer acceptability.

The commonly usable methods for inhibiting the sprouting are the use of preservation temperatures relatively low, included in the range 0-10°C, the irradiation with gamma radiations and the application of chemical inhibitors on the potatoes.

The low temperatures guarantee the absence of sprouting with temperature value only below 4°C, which causes the tuber sweetening: moreover it is hard to guarantee the low temperatures during the marketing phase, that normally occurs at ambient temperature, and in direct or indirect solar light conditions.

The irradiation of the tubers with doses of 20-100 Krads has sometimes a limited effectiveness and may cause, immediately after the irradiation or during the preservation, an increase of glycoalkaloids that have harmful effects on the customer's health for the action on the cholinesterase, especially with values higher than 18 mg/100 grams of fresh product.

The sprouting inhibition of the potatoes is more commonly achieved by treating with chemical synthesis molecules, carried in inactive powders, in the form of aerosol or solutions/emulsions, by which the tuber is respectively subjected to dusting, atomization or wet for immersion.

The proposed molecules have been mainly the maleic hydrazide (MH), the tetrachloronitrobenzene (TCNB),the methyl ester of α-naphtalene acid (MENA), the isopropyl-N-(3 chlorophenyl)cacbama te(CIPC), known the most used chloropropham.

The use of this latter however can cause problems both for the consumer health and for the deficiency of data related to its toxicology.

In fact it is still unknown if the chloropropham is transformed after the ingestion, in a very similar chemical compound, the ethylurethane, whose cancerogenicity on the human being is well known.

Recently an interesting method for inhibit the sprouting and diseases in plant matters including tubers as well potatoes has been disclosed, the following document entitled.: ENVIRONMENTALLY COMPATIBLE PROCESSES COMPOSITIONS AND MATERIALS TREATED THEREBY, inventor Margalith, E and B. Jehuda, N. see WO 00/05969 of date 10/02/00 PCT/IL/99/00403.
The method provides for the treatment of plant matter and foodstuffs during the storage, with aqueous composition containing hydrogen peroxide and comprising optionally effective trace concentration of dispersed metals among which iodine, or metals ions. Various ways of intermitting treatment include dipping in the mentioned solutions, or spraying solutions onto the foodstuffs or plant matter as well as in the form of ultra small drops with particle Size of less than and up to 10 micron in diameter by atomising systems.
However some drawbacks of this method are evident: for some concentrations severe phytotoxic damage may occur to the tubers; it seems advisable the intermittent hydrogen peroxide treatments with interval also of several weeks; the introduction of water in preservation cells due to the repeated treatment solutions, can increase to some extent the relative humidity of storage environment and therefore the risk of undesirable microbiological and biochemical processes in the tubers.

### DISCLOSURE OF THE INVENTION

The main object of the present invention is therefore to propose a method fit to prevent the sprouting and the vegetative resumption of the tubers, particularly of potatoes, after the dormancy phase.

Another object is to propose a method fit to prevent the increase of glycoalkaloids and reducing sugars content in the tubers after harvesting.

A further object is to control the growth and the diffusion of pathogen microorganisms, parasites and physiopathologies, and to distinctly underline damaged tubers to be eliminated.

Further object is to use in the potato treatment a non-toxic product effective at low concentration and under all different conditions of temperature, pressure and light and industrially available.

Further object of the invention is to propose a method simple and economic to be carried out and having an easy use.

### BEST MODE OF CARRYING OUT THE INVENTION

The method object of the present invention consists in exposing the tubers, preferably potato tubers contained in the preservation cell, to the iodine vapours, at temperature varying between 0° and 50°C, in a controlled room selected for the tuber preservation (air, modified air with carbon dioxide, nitrogen, nitrogen- air - carbon dioxide, inert gas) in which the iodine vapour, which can reach the room saturation, has the concentration varying between 0,005 and 82 grams per cubic meter. The iodine vapours can be liberated from the sublimation of solid iodine in the tuber preservation room, or fed in the preservation controlled room from a vaporization room where the iodine sublimes through beating even up to 100°C. The relative humidity of the preservation room is ranging from 80% to 96%, preferably between 85 and 88%. The tubers can be exposed in controlled room to the iodine vapours, even up to the saturation, at the selected temperature, pressure and relative humidity, in the after-harvest preservation rooms, for time intervals of one hour at least or longer or brief treatments or single or also repeated, before introducing the tubers in the market.

The binary mixtures of air and carbon dioxide or the binary mixture of air and nitrogen can have volumes of component gases ranging from 100/1 to 1/100.
The controlled environment can be subjected to recirculation for the almost uniform distribution of the iodine vapours inside the preservation room.
The controlled environment can be modified in its gaseous composition with regard to the introduction of the iodine vapours generated in the separated room.
The method can further include the suction of the iodine vapours from the preservation room after the exposure time interval.
The method can also include at least a further exposure of the tubers to the iodine vapours.

The pressure is ranging from 0.01 to 20 atmospheres.

Further details of the tuber treatment method for inhibiting the sprouting according to the present invention, will result from the description of some preferred examples of the invention.

### Example 1

In a two cubic meter preservation room are positioned 1.3 tons of potatoes of the "Primura" variety, without grown gems, in controlled air environment at 3°C and with relative humidity equal to 86%, 150 grams of pure degree RP iodine powder are spread on 9 ceramic plates at different heights for achieving the saturation equilibrium of the air with the iodine vapors. After 72 hours of equilibrium at the set temperature and without matter exchange with the outside, the treated potatoes are removed and preserved at 25° C with humidity of 96% for 6 days, not at the direct solar light

With respect to the untreated potatoes, those exposed to the iodine vapours do not have any bud growth and a greening degree about four times lower than the untreated potatoes. In the damaged potatoes, the lesions are underlined by the taken color, first reddish and then dark. The iodine weight control has shown an iodine decrease or 18 grams in comparison with the initial weight; even if this iodine is fully fixed in the tubers this corresponds to the concentration increase of 0,012 ppm.

### Example 2

In a 2 cubic meters preservation room kept at the temperature of 10°C, it is introduced a mixture of nitrogen at 96 % and oxygen at 4 % v/v, containing saturated iodine vapors at said temperature (4 gram/cubic meter), and afterward 1 ton of "Kennebec" variety potatoes with some bud already sprouted. The environment relative humidity is 86% and the time treatment is 48 hours; the environment gas mixture is recirculated by means of a fan for homogenizing the iodine vapors. Expired said time, the gas mixture containing the iodine vapors is sucked, and introduced air. The potatoes are examined and it can be noticed that the buds, already sprouted before the treatment, are necrotic and black, while the peels are a little darker than the comparison sample. The treated potatoes, afterward exposed at 27°C and at a relative humidity of 96% for 1 month not at the direct solar light, have not grown buds, while those untreated have shown evident bud growth for the 18% of tubers.

### Example 3

20 quintals of potatoes, cultivar "Vivaldi", are positioned in a 3 cubic meter preservation room with the possibility of recycle and control of the gaseous environment and the relative humidity. Air containing the 5% of carbon dioxide v/v, at temperature of 25°C and relative humidity of 82%, is introduced into the room. After moving the initial air volume, sublimated iodine vapors at 54°C, produced by heating solid iodine contained in glass ball heated by electric bath, are introduced into the air and carbon dioxide flow through a glass duct. The iodine vapors are diluted in the air and carbon dioxide environment, fed at the temperature of 25°C, up to the saturation. The gas mixture is recycled checking the iodine content in the gas environment, by taking a known volume of the mixture, by iodine titration with sodium sulfite. The iodine content was of 12,2 grams per cubic meter of gas environment. Stopped the treatment after six hours, and after sucking the gas mixture containing the iodine vapors and feeding air, it is withdrawn a potato sample, which is positioned into a glass container, with air at 28°C and 96% of relative humidity, not at the direct solar light. The early buds preceding the treatment are necrosed, but in some cases there is the growth of casual buds; instead an untreated sample of potatoes, exposed to the solar light in same conditions, show evident buds.

The exposure treatment to the iodine vapors at 25°C for others 6 hours, in the above described gas environment, is repeated on the residual amount of potatoes. A sample of treated potatoes, preserved in the air at 28°C, with a relative humidity of 96% and at the direct solar light, after the repeated treatment, does not show the growth of buds, even from gems sprouted before the treatment. On the treated potatoes there is not the mold growth, instead present on the untreated potatoes, especially on the peel lesions.

### Example 4

A cell having a capacity of 1 cubic meter, containing 600 Kg of "Primura" potatoes, is filled with a gas mixture of 70 air volumes, 15 nitrogen volumes and 15 carbon dioxide volumes, at a relative humidity of 92%. The cell is subjected to a 2 atmospheres controlled pressure of nitrogen taken from a cylinder, after having guaranteed an airtight closing. The temperature is maintained to 5° C and the iodine sublimes from 6 containers located symmetrically inside the cell. After 48 hours the cell environment is connected again with the external air and a representative sample of the treated potatoes is put in environment with relative humidity of 95% and at 20°C, not at the direct solar light for 3 weeks, together with a sample of untreated potatoes. After said time interval the gem and bud growth is noticed only for 1% of the treated potatoes, which are slightly grayer in comparison with those untreated, having instead buds for 36%.

### Example 5

A sample of 200 Kg of "Vivaldi" potatoes with gems not yet grown is positioned in a 0,5 cubic meters room, at 10°C. After having evacuated the air by means of vacuum pumps, through two side separate faucets, for pressure difference, respectively 5 grams of iodine powder and distilled water up to 85% of the saturation at 10°C, of the volume, are introduced. The tuber sample is exposed to the iodine vapors for 10 hours without recycling the gas environment, in such way that the total pressure is essentially the iodine pressure at 10°C, modified by the gases exhaled by the tubers. The nitrogen and oxygen absence favors a quicker diffusion of the iodine from the controlled environment to the tuber surface. After said time and having introduced the ambient air, a first sample is taken and the cell is closed again maintaining the temperature at 10°C. After other 48 hours of treatment the second sample is taken, which together with the first sample is preserved at the temperature of 26°C and relative humidity conditions of 96% not at the direct solar light, in comparison with potatoes sample unexposed to iodine. The first sample exposed to iodine vapors in vacuum atmosphere for a limited time of 10 hours, show the total absence of both the bud growth and the composition change of sugars.

### Example 6

In a 4 cubic meters room are introduced 25 quintals of "Primura" potatoes with gems sometimes partially grown and with approximately 5% of early buds.

The controlled environment is constituted by air containing 8% of carbon dioxide, 86% of relative humidity and at 15°C. 150 grams of iodine are distributed in the room within different glasses set at different heights and the iodine vapors are equally distributed by a recirculation pump. After 48 hours of treatment, a sample of treated potatoes is put in thermostat with transparent walls at 28°C and 95% of relative humidity in air, and maintained for 2 weeks, together with a sample of the same potatoes untreated. After said time there is on the untreated potatoes the almost generalized growth of buds and the mold growth especially in damaged potatoes.

In the treated potatoes there is no mold growth, while there is the necrosis of the preexisting buds and the browning of the gems, without bud growth.

### Example 7

In 2 cubic meter room are positioned 100 Kg of "Primura" potatoes with some early gem. The controlled environment is constituted by air, initially unmodified, at the temperature of 40°C, with relative humidity of 82%, at atmospheric pressure. 200 grams of iodine are positioned at different heights within 6 opened Petri plates having a 20 cm diameter. The cell air is pressure controlled at 8 atmospheres from a compressed air cylinder through regulation with manometer. After 1 hour a representative sample of potatoes is brought to the undirected solar light, with relative humidity of 93% and 30°C, and preserved at said conditions for 3 weeks.

After said time, there is no bud growth in the treated sample, while in the untreated sample, maintained at the same conditions, there is the bud growth in the 16% of the cases.

## Claims

1. Method for inhibiting the sprouting and avoiding the disease growth in tuber due to pathogen micro-organism or parasite infection **characterised in that** includes:
- the tuber introduction in a preservation room at controlled environment;
- the tuber exposure to iodine vapours for an exposure time of at least one hour at temperature varying between 0° and 50°C preferably between 4° and 16°C in room in which gases of controlled environment can be air modified with carbon dioxide, inert gas, nitrogen air-nitrogen-carbon dioxide, air-nitrogen, nitrogen and carbon dioxide, or vacuum, and in which the iodine vapour has the concentration varing between 0,005 to 82 grams per cubic meter and the relative humidity is varying between 80% and 96%, preferably between 85% and 88% and the pressure is included between 0.01 and 20 atmospheres and in which controlled atmosphere preservation room iodine vapours are liberated by sublimation of solid iodine positioned in the room or fed from separated room where iodine sublimes through heating even up to 100°C, and where the tubers are subjected to treatment for an hour at least

2. Method according to claim 1 in which the controlled environment includes air or nitrogen or binary mixture of air and nitrogen or binary mixture of air and carbon dioxide or ternary mixture of air, nitrogen and carbon dioxide, or single inert gas, or is constituted by vacuum.

3. Method according to claim 2 in which the binary mixtures have volumes ratio of component gases ranging from 100/1 to 1/100.

4. Method according to claim 1 in which the controlled environment is subjected to recirculation for the almost uniform distribution of the iodine vapors inside the preservation room.

5. Method according to claim 1 in which the controlled environment is modified in its gaseous composition with regard to the introduction of the iodine vapors generated in the separate room.

6. Method according to claim 1 **characterized in that** further includes the suction, of the iodine vapors from the preservation room after the exposure time interval.

7. Method according to claim 6 **characterized in that** includes also at least a further exposure of the tubers to the iodine vapors.

## Patentansprüche

1. Verfahren zur Verhinderung des Keimens und zur Vermeidung des Entstehens von Krankheiten in Knollen auf Grund von pathogenen Mikroorganismen oder einer Infektion mit Parasiten, **dadurch gekennzeichnet, dass** dieses folgendes umfasst:
- das Einlagern der Knollen in einem Frischhalteraum bei gesteuerter Umgebung;
- dem Einwirkenlassen von Joddämpfen auf die Knollen über eine Einwirkungszeit von mindestens einer Stunde bei einer zwischen 0° und 50°C, vorzugsweise zwischen 4° und 16°C, schwankenden Temperatur in einem Raum, in dem Gase mit gesteuerter Umgebung mit Kohlendioxid, Inertgas, Stickstoff, Luft-Stickstoff-Kohlendioxid, Luft-Stickstoff, Stickstoff und Kohlendioxid oder einem Vakuum luftmodifiziert werden können, und in dem der Joddampf eine zwischen 0,005 und 82 Gramm pro Kubikmeter schwankende Konzentration aufweist und die relative Feuchtigkeit zwischen 80% und 96%, vorzugsweise zwischen 85% und 88% schwankt, und der Druck zwischen 0,01 und 20 Atmosphären liegt, und wobei in dem Frischhalteraum mit gesteuerter Atmosphäre Joddämpfe durch Sublimierung von festem Jod freigesetzt werden, das sich in dem Raum befindet oder aus einem getrennten Raum zugeführt wird, wobei das Jod durch Erhitzen selbst bis zu 100°C sublimiert, und wobei die Knollen mindestens eine Stunde lang der Behandlung unterworfen werden.

2. Verfahren nach Anspruch 1, wobei die gesteuerte Umgebung Luft oder Stickstoff oder ein Zweistoffgemisch von Luft und Kohlendioxid oder ein Zweistoffgemisch von Luft und Kohlendioxid oder ein Dreistoffgemisch von Luft, Stickstoff und Kohlendioxid oder ein einziges Inertgas enthält oder durch ein Vakuum gebildet wird.

3. Verfahren nach Anspruch 2, wobei die Zweistoffgemische Volumenverhältnisse der Teilgase im Bereich von 100/1 bis 1/100 aufweisen.

4. Verfahren nach Anspruch 1, wobei die gesteuerte Umgebung zur fast gleichmäßigen Verteilung der Joddämpfe im Innern des Frischhalteraums in Umlauf gebracht wird.

5. Verfahren nach Anspruch 1, wobei die gesteuerte Umgebung in ihrer Gaszusammensetzung auf Grund des Einbringens der in dem getrennten Raum erzeugten Joddämpfe modifiziert wird.

6. Verfahren nach Anspruch 1, **dadurch gekennzeichnet, dass** dieses des weiteren das Absaugen der Joddämpfe aus dem Frischhalteraum nach dem Ablauf der Einwirkungszeit umfasst.

7. Verfahren nach Anspruch 6, **dadurch gekennzeichnet, dass** dieses auch mindestens ein weiteres Einwirkenlassen der Joddämpfe auf die Knollen umfasst.

## Revendications

1. Procédé pour inhiber la germination et prévenir la croissance de maladies dans un tubercule dues à une infection par un micro-organisme ou un parasite pathogène, **caractérisé en ce qu'**il comprend :
- l'introduction des tubercules dans une chambre de conservation ayant un environnement contrôlé ;
- l'exposition des tubercules à des vapeurs d'iode pendant un temps d'exposition d'au moins une heure à une température variant entre 0 et 50°C, de préférence, entre 4 et 16°C, dans une chambre où les gaz de l'environnement contrôlé peuvent être de l'air modifié par du dioxyde de carbone, un gaz inerte, de l'azote, un mélange air-azote-dioxyde de carbone, air-azote, azote et dioxyde de carbone, ou le vide, et dans lequel la vapeur d'iode a une concentration variant entre 0,005 et 82 grammes par mètre cube, et l'humidité relative varie entre 80% et 96 %, de préférence, entre 85% et 88 % et la pression est comprise entre 0,01 et 20 atmosphères et dans lequel les vapeurs d'iode dans la chambre de conservation à atmosphère contrôlée sont libérées par sublimation d'iode solide placé dans la chambre ou injectées à partir d'une pièce séparée où l'iode est sublimé par chauffage jusqu'à 100°C, et où les tubercules sont soumis au traitement pendant une heure au moins.

2. Procédé selon la revendication 1, dans lequel l'environnement contrôlé comprend l'air ou l'azote ou un mélange binaire d'air et d'azote ou un mélange binaire d'air et de dioxyde de carbone ou un mélange ternaire d'air, d'azote et de dioxyde de carbone, ou un gaz inerte unique, ou est constitué d'un vide.

3. Procédé selon la revendication 2, dans lequel les mélanges binaires ont un rapport en volumes des gaz constitutifs allant de 100/1 à 1/100.

4. Procédé selon la revendication 1, dans lequel l'environnement contrôlé est soumis à circulation pour une distribution quasi uniforme des vapeurs d'iode à l'intérieur de la chambre de conservation.

5. Procédé selon la revendication 1, dans lequel l'environnement contrôlé est modifié du point de vue de sa composition gazeuse par introduction des vapeurs d'iode générées dans la pièce séparée.

6. Procédé selon la revendication 1 **caractérisé en ce que**, en outre, il comprend l'aspiration des vapeurs d'iode contenues dans la chambre de conservation à expiration du temps d'exposition.

7. Procédé selon la revendication 6 **caractérisé en ce qu'**il comprend également au moins une autre exposition des tubercules aux vapeurs d'iode.
